# EUROPEAN PATENT SPECIFICATION

(11) **EP 1 009 575 B1**
(45) Date of publication and mention of the grant of the patent: **11.06.2003**
(21) Application number: 98907285.5
(22) Date of filing: 19.02.1998
(51) Int. Cl.: B23K 9/12, B23K 9/29

(54) **IMPROVED WELDING TORCH AND METHOD OF USE**
VERBESSERTE SCHWEISSBRENNER UND VERWENDUNGSVERFAHREN
MODELE PERFECTIONNE DE TETE DE SOUDAGE ET PROCEDE D'UTILISATION

(30) Priority: 19.02.1997 NZ 31426697
(43) Date of publication of application: 21.06.2000
(73) Proprietor: La Soudure Autogène Française, 95310 Saint Ouen L'Aumone (FR)
(72) Inventor: O'Neill, David Royd, Hamilton 2001 (NZ)
(74) Representative: Le Moenner, Gabriel
(86) International application number: NZ9800023
(87) International publication number: WO98036865

(56) References cited:
- US-A- 3 825 712
- US-A- 5 302 805
- ITSURO TATSUKAWA ET AL.: "The influence of filler metal on weld bead penetration and shape in automatic TIG welding" WELDING PRODUCTION., vol. 2, no. 1, 1988, CAMBRIDGE GB, pages 26-32, XP002068209
- PATENT ABSTRACTS OF JAPAN vol. 009, no. 191 (M-402), 7 August 1985 -& JP 60 056481 A (TOSHIBA KK), 2 April 1985,

## Description

### TECHNICAL FIELD

The present invention is directed to methods and apparatus associated with welding. Comparable welding technologies addressed in this specification include TIG and MIG welding techniques. In particular the present invention is directed to autofeed welding techniques and apparatus.

### BACKGROUND ART

Electric arc welding techniques have been known for some time. Such techniques are still commonly used and in the simplest form comprises an electrode tip extending from a handpiece which is brought into contact with, and then proximity to, a workpiece with the resulting arc between tip and workpiece creating a weld in the weld zone.

However, as welding techniques have progressed, and also to cater for non-ferrous metals or specialised alloys, new welding techniques have come into practice. Many of these rely on the introduction of inert gasses into the weld zone to reduce oxidation or to alter other characteristics of the formed weld. The most commonly used of such techniques, at the present time, are MIG (Metal-Inert-Gas) and TIG (Tungsten-Inert-Gas) welding techniques.

With reference to MIG and TIG welding techniques, use is typically made of a hand held welding torch. An electrode protrudes from the torch while nozzles direct inert gasses in the vicinity of the electrode tip, and thus the weld zone. A welding wire is introduced into the weld zone either manually, or by automatic feed. Guides are typically provided on the torch assembly to ensure that the wire is directed towards the weld zone. Typically, the arrangement is such that the wire is introduced at a substantially perpendicular angle (typically between 70°-90°) to the plane of the work surface, or the line of the weld, in the weld zone.

In practice, the user initiates the arc and weld and then manually draws the torch along the line of the weld (to be formed). The result is an advancing molten portion into which the welding wire is continuously fed manually by the operator. If the welder is experienced and skilled, the result is a relatively clean weld having the appearance of a series of waves or crescents along the length of the weld. The more experienced and skilled the operator, then the smaller and less in number will these waves or ridges will be.

These waves or ridges result, at least partially, from the torch being moved along the workpiece at a non-constant speed and the welding wire not being fed at a commensurate rate. Even for the most experienced and skilled operators on the most ideal work surfaces, it is impossible to form a weld which is totally free of such waves or ridges. For less skilled operators, such waves or ridges may be numerous, and quite varied in size.

In some applications, such waves or ridges (if minimal in size and shape) may not matter. However, in most applications, some grinding of the ridges to smooth the weld may be required. In food related industries, which typically use stainless steels, all welded joints must be perfectly smooth for hygiene purposes. Accordingly, a great deal of time and effort is expended in smoothing and cleaning welds.

Another disadvantage of the prior art is that the presence of waves and ridges makes cleaning around the weld area (to remove welding by-products) more difficult. It also tends to be a case that the greater the number of surface irregularities then the greater amount of cleaning that is required also to remove oxidation and other unwanted by-products. Accordingly, if a perfectly smooth and regular weld can be obtained, then any cleaning is typically minimised and any additional grinding or working of the weld negated.

A further disadvantage of the prior art is the maximum size of welding wire that can be successfully used. Typically welding wire is used to introduce additional material into the weld zone so as to fill any gaps, or to form a fillet between the pieces being joined. However, under existing MIG and TIG technologies, there is a maximum size that can be practically used when welding. Typically a usable maximum is 1.6 mm, with larger diameter wires being difficult to control or use to form good welds.

Another disadvantage of the prior art is the speed by which welds are formed. Typically speed is dependent upon the skill and experience of the operator, though even the most experienced operator has a maximum speed by which he can control and draw the torch at a constant speed.

A further disadvantage of the prior art also stems from the speed by which the operator can hand control (in a regular manner) a welding torch. This problem concerns the heat within the weld zone - greater heat can provide better welds and allow the use of greater diameter welding wires. However if the heat is maintained for too long then excessive heating, and burn through, in the weld zone may result. Accordingly, certain gas mixtures which can result in a cleaner or better weld cannot be used, because they also increase the temperature within the weld zone. Accordingly, some specialised gas mixtures which would be preferable or useful, cannot be successfully used in most applications.

European patent specification No. EP 0 803 309 represents attempts by the prior art to address some of the problems mentioned above. The described invention is directed to a hot-wire TIG welding torch allowing for remote control (from the torch assembly) of an associated automatic welding wire feeder. While this improves some aspects of control for the operator - for instance by allowing them to automatically control wire feed speed to match their welding speed - it still fails to address problems associated with making uniform welds. At best the described system is only semi-automated - and is described as such - and still relies heavily on the skill of the operator to make a satisfactory weld.

It fails to disclose one important feature of the present invention, which will be described more fully later - using the automatic feed of the welding wire to propel the torch assembly along at a uniform speed. In addition features such as the curved feed path for the wire general preclude such operation and also limits the use of heavier gauge welding wire where the need for constant speed torch travel is sometimes of greater necessity.

The article of ITSURO TATSUKAWA ET AL.: "The influence of filler metal on weld bead penetration and shape in automatic TIG welding" WELDING PRODUCTION, vol. 2, no. 1, 1988, CAMBRIDGE, GB, pages 26 - 32, discloses a method and torch in accordance with the precharacterising portions of claims 1 and 13.

It is an object of the present invention to address the foregoing problems or at least to provide the public with a useful choice.

Further aspects and advantages of the present invention will become apparent from the ensuing description which is given by way of example only.

### DISCLOSURE OF INVENTION

According to one aspect of the present invention there is provided a method of forming a continuous weld using a welding torch assembly, according to claim 1.

According to a further aspect of the present invention there is provided a welding torch assembly according to claim 13.

A limitation of the prior art was the difficulty by which a continuous uniform weld could be formed. In most cases this problem was due to the inability of an operator to draw a welding torch along the workpiece in a constant and continuous manner, and also to feed the welding wire at the same rate. This is one of the difficulties which the present invention seeks to address.

The present invention seeks to address this problem by providing means by which the welding torch is automatically propelled along the workpiece (in the context of this specification, the terms 'workpiece' shall also be taken to include two or more articles which are being joined by welding). While a number of different methods of propelling a torch along a workpiece may be relied upon, the preferred method according to the present invention is to rely on the welding wire, being fed into the weld zone, to propel the torch.

In simplistic terms, the welding wire within the weld zone is connected to the workpiece and is resistant to movement with respect to same. More specifically the wire will not be firmly fixed to the workpiece as generally any portion of the welding wire within the weld zone will be molten. However, despite this, there is still a resistance should the wire be forced further into the weld zone. This resistance is sufficient for preferred embodiments of the present invention to be put into practice.

For simplicity of description, it shall be considered that the welding wire is fixed with respect to the workpiece at the welding zone. Accordingly, the welding wire may be used as a support for drawing (or more accurately, pushing) the torch along the workpiece.

In preferred embodiments of the present invention, automatic wire feed systems are relied upon. Because the welding wire cannot be pulled backwardly with respect to the workpiece, the automatic wire feed system will have the effect of pushing the torch along the workpiece at a constant rate providing certain conditions are met.

These conditions at least partially relate to the angle in which the welding wire is introduced to the workpiece. In virtually all prior art devices known to the applicant, the welding wire is introduced almost perpendicularly (commonly at 70°-90°) to the workpiece. In many respects this is disadvantageous as any effect from the back force provided by the wire pushing against the workpiece would be to force the torch away from the workpiece. This tends to then alter the arc distance which has a direct affect on the resulting weld. This degrades the quality of the weld as the user must not only draw the torch along at a constant speed, but also maintain it at a constant height.

In contrast, the present invention seeks to introduce the feed wire at a reasonably acute angle to the workpiece so that the resultant back force (caused by resistance of the welding wire to movement with respect to the workpiece) propels the torch in a direction having a major horizontal component and in the direction of the weld to be formed. Typically this is achieved by introducing the welding wire into the weld zone at an angle of 50° or less. This angle is measured with respect to the plane of the workpiece (assuming that it is planar), or according to the line of the weld. For non-linear and nonplanar workpieces, this shall be construed as being the line or plane of the workpiece at the weld zone.

More preferably, the preferred angle is 30°-45° inclusive, though this may vary in different embodiments. Also to be taken into account in torch design. This may include the ability for the user to hold the torch and control it. Compactness is also a consideration as very acute angles may result in excessively long welding wire lead-ins limiting use of the torch assembly in difficult or confined spaces.

A further consideration is how the welding wire is fed or guided in to the weld zone. Preferably this is a substantially straight path, free from curves or bends. The action of the autofed welding wire is to propel the torch assembly along at a rate proportional to the feed speed. Any resistance to the free travel of the welding wire reduces the ability for the torch assembly to be readily propelled along the workpiece. Trials by the applicant have found that curves less than those shown in the drawings of EP O 803 309 can be detrimental and especially with heavier gauge welding wires. In many cases conventional and available automatic wire feeders were unable to cope unless lighter wire gauges were used, and/or the final lead-in path for the welding wire was substantially straight or only very gently curved. If the welding wire touched the work-piece directly the autofeeder would stop due to the resistance presented to the wire.

Accordingly the preferred embodiments of the present invention utilise substantially straight or only gently curved wire guide lead-in portions.

It has been found in trials by the applicant, that relying on automatic wire feed means, when the welding wire is introduced within the aforesaid range of angles, does propel the torch along the workpiece at a constant rate. An advantage of this is that welding wire is fed at substantially the same rate (or at least a consistent and proportional rate) as the torch is propelled. During the trials welds having no visible waves or ridges were consistently obtained. These welds required no grinding and minimal cleaning of oxidation by-products, which were readily removed through minimal manual hand brushing. This represents a significant advantage over anything able to be achieved in the art.

Other advantages may also be realised in various other embodiments of the present invention. During trials, welds were typically formed at linear rates of between 300-500 mm per minute. This represents a three-fold increase in speed over traditional hand-held welding where the operator must draw the torch along the workpiece. Subsequent trials achieved welding speeds of up to 1000 mm per minute. It was also found, that less experienced operators could also weld at faster rates, and still produce exceptional quality welds.

A further realisable advantage in many embodiments is that fact that one hand of the operator may be freed. Where non-automatic wire feed systems are relied upon, it is usual for the operator to use their second hand for introducing the wire into the vicinity of the weld.

However, in preferred embodiments of the present invention, the second hand is no longer required. This means that the operator can use both hands for holding and controlling the torch, which can provide even greater control over the quality of the finished weld.

Embodiments of the present invention may also allow other advantages over the known prior art. For instance, greater than average diameter welding wires may be used without difficulty. In the past, welding wires have typically been limited to 1.6 mm in diameter. This is at least partially due to the curved guide path for the welding wire. Also welding with greater diameter wires can be more difficult for a user due partially to the greater heat required to form an effective weld. Producing a greater quantity of heat in the weld zone presents potential problems should the heat be maintained for too long a period and this places demands on the skill of the user.

However, in trials of the present invention, welding wires with diameters between 1.6 mm - 3.2 mm were routinely used with no apparent difficulty. This was with torch assemblies having substantially straight wire guide portions. It is considered that even greater diameter welding wires or rods could also be used with little difficulty. Similarly, it was envisaged that greater welding speeds (measured in mm. per minute) could also be attained in various embodiments of the present invention, and the greater speed (limiting localised overheating) was one reason why effective consistent welds with greater diameter wires can be achieved.

Another difficulty of the prior art was limitations in the use of specialised gases. The term 'specialised gas mixture' shall be taken to mean any gas or mixture of gases which may be introduced into the torch and weld zone. This includes not only gases and gas mixtures commonly used in MIG and TIG welding (such as Argon, or Argon Helium mixtures) but also other gas mixtures which are less commonly used or not used at all. This includes gas mixtures such as Argon/Helium/Hydrogen.

Some of these specialised gas mixtures can provide improved quality welds or allow the welding of difficult metals. For instance, an Argon/Helium/Hydrogen gas mixture would be preferred when welding some oxidisable metals. The reducing nature of the hydrogen tends to reduce oxidation by-products. However, the use of such mixtures also results in a very hot arc within the weld zone which again introduces difficulties of localised temperature and heat within the weld zone. Accordingly, only the most experienced and skilled welders would perhaps be able to weld using such gas mixtures. However, even the speed of the fastest welders may be too slow for consistent, good quality welds without damage to the workpiece.

The greater speed and control over the welding torch in preferred embodiments of the present invention may also mean that a gas mixture more amenable to the welding of difficult metals (such as aluminium) can be used, as well as the formation of welds in difficult materials by less experienced operators.

Apparatus according to the present invention may merely comprise a modification of existing welding torches though specially designed welding torches may also be relied upon. The main differences between preferred embodiments of welding torches according to the present invention, and the prior art, is the angle at which the welding wire is introduced into the weld zone, and also the relatively straight path to the weld zone provided for by the welding wire guide portion.

The introduction, as is the case in the prior art, of the welding wire at a substantially perpendicular angle to the workpiece is not acceptable for the present invention and thus the guides for introducing the welding wire to the weld zone must be positioned so that the welding wire is introduced at a more acceptable angle. Ideally, when the welding torch is held at the correct orientation to the workpiece, the welding wire will be introduced into the weld zone at an angle of 50° or less (with respect to the plane, or line, of the weld at the weld zone). If possible, introducing the weld at more acute angles to the workpiece (30° or less) may be preferable in some instances though may introduce difficulties in design of the torch handpiece. In addition, introducing the welding wire at exceptionally acute angles can cause potential problems as the length of the welding torch (when measured along the direction of the weld) may be increased, which may decrease the torch's manoeuvrability in tight confines. Accordingly, preferred embodiments of the present invention will typically attempt to introduce the welding wire into the weld zone at an angle of 30°-45° inclusive. This appears to be acceptable for most applications of the present invention.

Another consideration is the point to where the welding wire is delivered. For instance most embodiments will deliver the welding wire towards a point between the tip of the electrode and workpiece. This is typically a point within the arc. This is suitable for most applications, including typical butt welding techniques. However, while this arrangement is also suitable for fillet welding, some advantage may often be obtained by directing the welding wire to a higher point - e.g. to a point closer to the tip of the electrode or even at the electrode itself. This can result in earlier melting of the welding wire, especially if a hot-wire system (in which the welding wire carries charge) is used, which can deposit more molten welding wire onto the workpiece enabling greater fillet build-up. The arrangement may be enhanced by directing the wire at a lower angle with respect to the workpiece (substantially 20° or less) or substantially perpendicularly (within 15° of perpendicular) to the axis of the electrode.

It has been found in experimental trials that in such arrangements there is still sufficient resistance to travel of the fed wire within the welding zone to propel the torch assembly along the workpiece.

Accordingly some torch assemblies may direct the welding wire towards either position, though embodiments in which the feed angle and/or direction of the welding wire can be adjusted are also envisaged.

Automatic welding wire feed systems are known and commercially available, and may be employed in the present invention. However, while not necessary, it is preferable to use systems employing control mechanisms which halt the automatic wire feed when power to the electrode is also cut, and re-commences when welding operations are resumed. Here, some form of control or trigger may be provided on the torch assembly. This may act in conjunction with the power control to the electrode switch. Variable speed control is also a possibility. Proportional speed controls are used on many power tools and these techniques may be employed in various embodiments of the present invention.

Other modifications to torch assemblies include the ability to alter the position that the wire is fed. This may simply be achieved by having a movable bracket supporting the wire guide portions, and which may be pivoted about the main body of the torch assembly. This can allow for left-to-right or right-to-left travel, as well as taking into account whether the user is left- or right-handed, as well as user-preference. Movable side handles are common on many power tools such as electric drills and angle grinders and these techniques may be implemented on embodiments of the present invention.

In addition, kits and adaptors may be provided for converting existing welding torch assemblies for use with the present invention. These kits may simply comprise a bracket able to depend from the torch assembly and support a wire guide portion. This may also allow for control of automatic wire feeders from the torch assembly if the existing assembly does not allow this. This may involve rewiring of the power control switch to the electrode to allow for additional control of an external device.

### BRIEF DESCRIPTION OF DRAWINGS

Further aspects of the present invention will become apparent from the following description which is given by way of example only and with reference to the accompanying drawings in which:
- Figure 1: A side diagrammatic view of the preferred embodiment of the present invention,
- Figure 2: a plan diagrammatic view of a typical weld as formed by the prior art techniques,
- Figure 3: is a side diagrammatic view of an embodiment suitable for butt welding, and
- Figure 4: is a side diagrammatic view of an embodiment suitable for fillet welding.

### BEST MODES FOR CARRYING OUT THE INVENTION

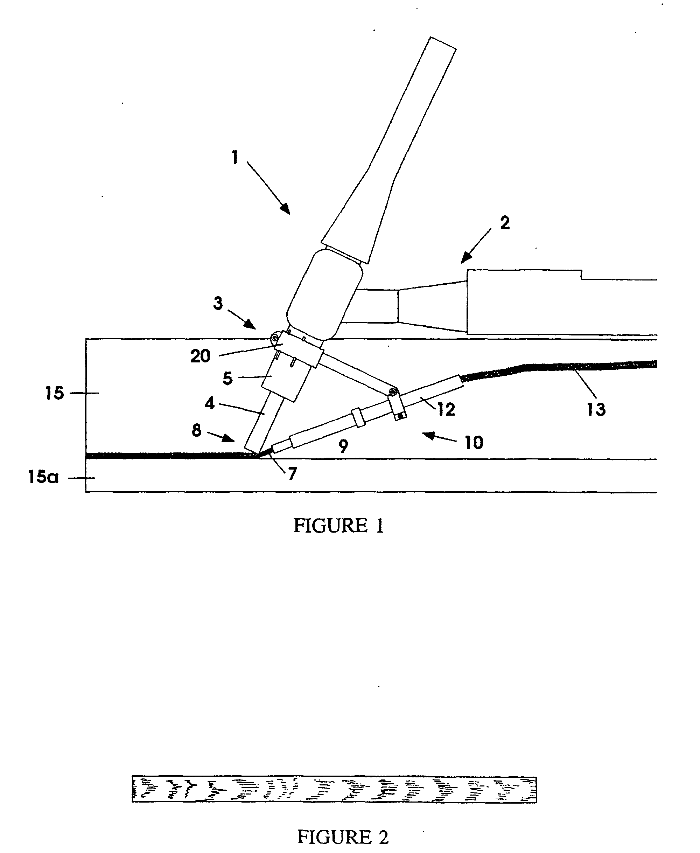

With reference to the drawings and by way of example only there is provided a welding torch assembly (generally indicated by arrow 1) comprising a body (2) and head (3) assembly supporting a welding electrode (4) and including means (5) capable of directing a connected gas mixture to the vicinity of the electrode (4);
- there also being associated with the welding torch assembly, automatic welding wire feed means, the torch assembly (1) being characterised that when in a normal welding orientation to a workpiece (such as indicated in Figure 1) the welding wire (7) is fed into the weld zone (8) at an angle (9) of 50° or less to the plane of the work surface, or the line of the weld, at the weld zone (8).

Figure 1 illustrates a typical welding torch assembly (1) which differs little from the prior art other than the feed portion (10) for the welding wire (7). This comprises a modified bracket which holds the guide (12) for welding wire (7) at a distance and angle whereby the welding wire (7) can be introduced to the weld zone (8) at the required angle. The guide portion (12) guides the wire (7) to the weld zone (8) in a substantially straight path. Connected to the guide (12) is cable (13) which is connected to an automatic wire feed unit. This may be constructed so that it cannot be bent less than a minimum radius, ensuring that the welding wire on its journey from auto-feeder to torch assembly can have a relatively straight and unhindered path of travel.

In the embodiment of figure 1 the bracket and wire feed assembly (10) is shown under the torch handle (2). In other embodiments the wire feed assembly (10) may be fixed in other positions, such as perpendicularly to the torch handle (2) (when viewed in plan) or diametrically opposite or positions in between - particularly by rotation of collar (20) (see below).

The illustrated embodiment provides a rotatable collar (20) for fastening the bracket to the torch head assembly (3). This allows the bracket and wire feed to be swivelled and altered in height as required.

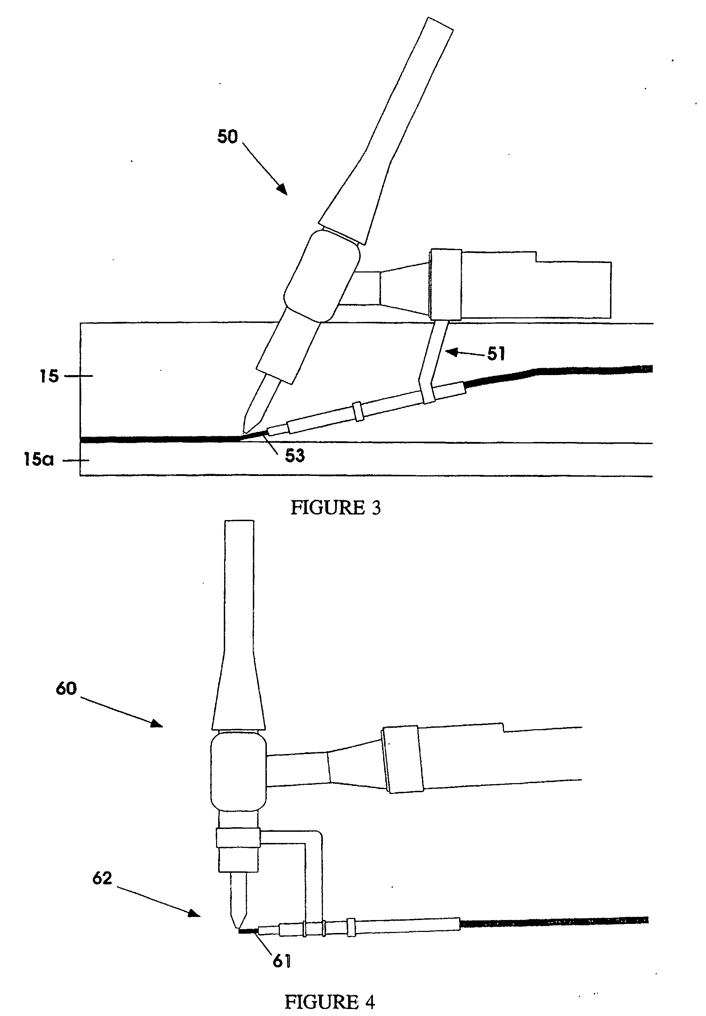

An adjustable joint (30) may also be provided to allow adjustment of the point to which the welding wire is fed (see also figures 3 and 4).

Figure 3 illustrates an embodiment (50) primarily for standard butt-welding. It is virtually identical to the embodiment of figure 1 though shows the arrangement in which the bracket (51) is mounted alternatively to the torch body portion (52). It also provides for internal water cooling (not visible but already incorporated into many torch designs) allowing higher amperages to be used. This is particularly useful for faster welding speeds.

Also more clearly shown is the position that the wire (53) is fed to. This is in contrast to the embodiment (60) of figure 4 in which the wire (61) is fed at a more acute angle and more towards the tip of the electrode (62). This latter embodiment is configured more for fillet welding and tends to allow for the delivery of a greater quantity of welding wire into the formed weld.

In practice, the torch assembly (1) is brought into the vicinity of the workpiece. When beginning the weld, slight pressure is applied so that there is some friction between the welding wire (7) and the workpiece (15). When welding is initiated, the wire (7) will be fed from the guide (12) to propel the torch along. However, until welding has commenced, there may be little back resistance between the welding wire (7) and workpiece (15) to cause the welding torch (1) to move along. Accordingly, there should be some initial downward pressure to cause friction between the welding wire (7) and workpiece (15) until the two have become fused by welding. After that, the fed wire (7) will cause the welding torch (1) to move along at a constant rate. All that the user needs to do is to ensure that the device is maintained at the same orientation and at the required distance from the workpiece.

The substantially straight guide path assists in the above procedure. Trials with curved guide paths indicate that the total resistance on the welding wire when contact is made with the workpiece is too great for most existing prior art autofeeders to operate over a useful range of wire gauges. Consequently prior art welding devices and techniques do not normally allow for touching of the welding wire and workpiece. Instead the operator must often maintain the torch assembly above the workpiece at a height at which the molten welding wire is dripped onto the workpiece within the weld zone. This partially accounts for the waves present in most welds, and places high demands on the skill of the operator to maintain the torch and welding wire at a consistent height. Any variation results in fluctuations of the arc which then alters the conditions within the weld zone and hence the resulting weld. in contrast the contact between wire and workpiece in embodiments of the present invention allows the torch assembly to be more readily maintained at a constant height, again contributing to a more consistent weld along its length.

The result is a weld which can be virtually 100% free of any ridges or waves, unlike the weld in Figure 2 which is representative of a typical weld according to the prior art.

In a preferred embodiment a tungsten electrode is used though other metal electrodes may also be used according to various other embodiments of the present invention.

Different gas mixtures may also be relied upon. While traditional gas mixtures may be used, the following gas mixture may also be used for stainless steel welding:

| | |
|---|---|
| 15-70% | Helium |
| 3-10% | Hydrogen |
| 25-80% | Argon |
| to a total of 100%. | |

A preferred gas mixture is approximately:

| | |
|---|---|
| 20% | Helium |
| 5% | Hydrogen |
| 75% | Argon |
| to a total of 100%. | |

For aluminium, the following gas mixture may be used as an alternative to commonly used gas mixtures:

| | |
|---|---|
| 20-50% | Helium |
| 50-80% | Argon |
| to a total of 100%. | |

A more specific gas mixture for use with aluminium comprises:

| | |
|---|---|
| 20% | Helium |
| 80% | Argon. |

While skill is still required to operate the present invention, the fact that some of the tasks previously performed by the user are now performed automatically helps contribute to the quality of the resulting weld. For instance, because the wire is automatically fed and helps propel the torch along at a constant speed, the operator can keep both hands on the torch assembly. In contrast, in many existing units of the prior art, the operator uses one hand to ensure both the torch and electrode are at the correct distance above the workpiece, while the other hand is used to ensure that the wire is at the correct distance from the electrode to melt and flow down into the weld zone. The result is that the operator is dropping blobs of molten wire continuously into the weld zone. This accounts for the wavy or ridged nature of most prior art welds.

Aspects of the present invention have been described by way of example only and it should be appreciated that modifications and additions may be made thereto without departing from the scope thereof as defined in the appended claims.

## Claims

1. A method of forming a continuous weld using a welding torch assembly, said method comprising steps of:
i) feeding a welding wire (7) into a weld zone (8) at an angle (9) of 50° or less to the plane of a work surface or the line of the weld, said angle being measured at the weld zone (8);
ii) creating within the weld zone (8) a weld incorporating a work piece and welding wire;
and wherein the welding wire (7) is automatically fed into the weld zone (8) from the welding torch assembly (1), **characterised in that** the resistance of the tip of the welding wire against the newly formed weld within the weld zone (8) results in the torch assembly (1) being propelled away from the newly formed weld, in the general direction that a weld is to be formed, and at a velocity proportional to the speed by which the welding wire is fed into the weld zone (8).

2. A method according to Claim 1 wherein the approach along which the welding wire is fed into the welding zone is a substantially straight path.

3. A method according to claim 1 or 2 wherein the path of the wire from welding zone to its source is substantially free of curves which impede the travel of the wire into the welding zone.

4. A method according to claims 1 to 3 wherein the welding wire is fed into the weld zone at a rate less than the maximum speed for the torch assembly to form a satisfactory weld within the weld zone.

5. A method according to claims 1 to 4 wherein there is fed into the welding zone either or both of a substantially inert or reducing gas mixture.

6. A method according to claim 5 wherein a gas mixture comprises two or more of Helium, Argon, and Hydrogen.

7. A method according to claims 1 to 6 wherein the welding wire has a diameter of 1.6mm or greater.

8. A method according to claims 1 to 7 wherein the angle of the torch head and assembly is within 30° of perpendicular to the plane of the work surface or line of the weld, said angle being measured at the weld zone.

9. A method according to claims 1 to 8 when used for forming fillet welds, and wherein the welding wire is directed at an angle substantially perpendicular to the welding electrode of the torch assembly, and to intersect substantially with the tip of the electrode.

10. A method according claims 1 to 8 when used for forming butt welds, and wherein the welding wire is directed to a point between the welding electrode of the torch assembly and the work piece.

11. A method according to claims 1 to 10 when controlled by a user, the arrangement being such that the torch assembly is hand held, and the feed of the welding wire into the feed zone propels the torch assembly along at a rate commensurate to forming a consistent weld for the work piece being welded, the user guiding the torch assembly in the direction chat a weld is to be formed.

12. A method according to claims 1 to 11 wherein the torch assembly is coupled with an automatic wire feed assembly.

13. Welding torch assembly (1) comprising:
- a body (2) and head (3) assembly supporting a welding electrode (4), and including gas directing means (5) capable of directing a connected gas mixture into the vicinity of the electrode (4);
- a welding wire guide portion (12) for a welding wire (7) deliverable from an automatic welding wire feed means, the welding guide portion (12) directing the welding wire into the vicinity of the electrode (4) at an angle of 50° or less to the plane of a work surface or the line of the weld,
characterized it further comprises means for feeding the welding wire (7) at a velocity whose horizontal component is substantially the same as the desired speed that the torch assembly (1) is propelled due to the resistance of the wire against a newly formed weld, in the general direction that a weld is to be formed.

14. Welding torch assembly according to Claim 13, wherein the welding wire guide portion (12) defines a path of the welding wire (7) which is substantially straight.

15. Welding torch assembly according to Claim 13, wherein the welding wire guide portion (12) directs the wire (7) substantially at the electrode (4) or to a point below the tip of the electrode (4).

16. Welding torch assembly according to Claim 13, wherein the welding wire guide portion (12) is capable of guiding welding wire (7) of 1.6 mm or greater.

17. Welding torch assembly according to Claim 13 including control means capable of at least providing a signal to an automatic welding wire feed to cease feed when the user performs the action of cutting power to the welding electrode (4), and/or including means for controlling the speed at which the wire is fed from an attached automatic wire feeder.

## Patentansprüche

1. Verfahren zur Bildung einer durchlaufenden Schweißnaht unter Verwendung einer Schweißbrennereinheit, wobei das Verfahren die folgenden Schritte umfaßt:
i) Zuführen eines Schweißdrahts (7) einer Schweißzone (8) in einem Winkel (9) von 50° oder weniger zur Ebene einer Arbeitsfläche oder zur Schweißfuge, wobei der Winkel an der Schweißzone (8) gemessen wird;
ii) Schaffen einer Schweißnaht unter Anwendung eines Werkstücks und von Schweißdraht innerhalb der Schweißzone (8) ;
und bei dem der Schweißdraht (7) von der Schweißbrennereinheit (1) aus automatisch der Schweißzone (8) zugeführt wird, **dadurch gekennzeichnet, daß** der Widerstand der Spitze des Schweißdrahts gegenüber der neu gebildeten Schweißnaht innerhalb der Schweißzone (8) zur Folge hat, daß die Brennereinheit (1) in der allgemeinen Richtung, in der eine Schweißnaht gebildet werden soll, und mit einer Geschwindigkeit, die der Geschwindigkeit, mit der der Schweißdraht der Schweißzone (8) zugeführt wird, proportional ist, von der neu gebildeten Schweißnaht weggetrieben wird.

2. Verfahren nach Anspruch 1, bei dem der Zuführungsweg, an dem entlang der Schweißdraht der Schweißzone zugeführt wird, ein im wesentlichen gerader Weg ist.

3. Verfahren nach Anspruch 1 oder 2, bei dem der Weg des Drahts von der Schweißzone zu seiner Quelle im wesentlichen frei von Kurven ist, die die Bewegung des Drahts in die Schweißzone hinein behindern.

4. Verfahren nach den Ansprüchen 1 bis 3, bei dem der Schweißdraht mit einer Rate, die geringer als die maximale Geschwindigkeit der Brennereinheit ist, der Schweißzone zugeführt wird, um eine zufriedenstellende Schweißnaht innerhalb der Schweißzone zu bilden.

5. Verfahren nach den Ansprüchen 1 bis 4, bei dem entweder ein im wesentlichen inertes oder ein reduzierendes Gasgemisch oder beides der Schweißzone zugeführt wird.

6. Verfahren nach Anspruch 5, bei dem ein Gasgemisch zwei oder mehrere der Stoffe Helium, Argon und Wasserstoff umfaßt.

7. Verfahren nach den Ansprüchen 1 bis 6, bei dem der Schweißdraht einen Durchmesser von 1,6 mm oder mehr hat.

8. Verfahren nach den Ansprüchen 1 bis 7, bei dem der Winkel des Brennerkopfes und der Brennereinheit innerhalb von 30° senkrecht zur Ebene der Arbeitsfläche oder zur Schweißfuge liegt, wobei der Winkel an der Schweißzone gemessen wird.

9. Verfahren nach den Ansprüchen 1 bis 8 bei Verwendung zur Bildung von Kehlnähten, bei dem der Schweißdraht in einem im wesentlichen senkrecht zur Schweißelektrode der Brennereinheit verlaufenden Winkel ausgerichtet ist und sich im wesentlichen mit der Spitze der Elektrode schneidet.

10. Verfahren nach den Ansprüchen 1 bis 8 bei Verwendung zur Bildung von Stoßnähten, bei dem der Schweißdraht zu einem zwischen der Schweißelektrode der Brennereinheit und dem Werkstück befindlichen Punkt hin ausgerichtet ist.

11. Verfahren nach den Ansprüchen 1 bis 10 bei Steuerung durch einen Benutzer, wobei die Anordnung so beschaffen ist, daß die Brennereinheit manuell gehalten wird, und wobei die Brennereinheit durch das Zuführen des Schweißdrahts der Zuführungszone mit einer Rate weitergetrieben wird, die in Einklang mit der Bildung einer haltbaren Schweißnaht für das derzeit geschweißte Werkstück steht, wobei der Benutzer die Brennereinheit in der Richtung führt, in der eine Schweißnaht gebildet werden soll.

12. Verfahren nach den Ansprüchen 1 bis 11, bei dem die Brennereinheit mit einer automatischen Drahtzuführungseinheit gekoppelt ist.

13. Schweißbrennereinheit (1), die folgendes umfaßt:
- eine Einheit aus einem Körper (2) und einem Kopf (3) zum Abstützen einer Schweißelektrode (4), wobei die Einheit ein Gasausrichtungsmittel (5) beinhaltet, das ein verbundenes Gasgemisch in die Nähe der Elektrode (4) lenken kann;
- einen Schweißdrahtführungsabschnitt (12) für einen Schweißdraht (7), der von einem automatischen Schweißdrahtzuführungsmittel aus zugeführt werden kann, wobei der Schweißdrahtführungsabschnitt (12) den Schweißdraht in einem Winkel von 50° oder weniger zur Ebene einer Arbeitsfläche oder zur Schweißfuge in die Nähe der Elektrode (4) ausrichtet,
**dadurch gekennzeichnet, daß** sie weiterhin ein Mittel zum Zuführen des Schweißdrahts (7) mit einer Geschwindigkeit umfaßt, deren Horizontalkomponente im wesentlichen der gewünschten Geschwindigkeit entspricht, mit der die Brennereinheit (1) aufgrund des Widerstands des Drahts gegenüber einer neu gebildeten Schweißnaht in der allgemeinen Richtung weitergetrieben wird, in der eine Schweißnaht gebildet werden soll.

14. Schweißbrennereinheit nach Anspruch 13, bei der der Schweißdrahtführungsabschnitt (12) einen Weg des Schweißdrahts (7) definiert, der im wesentlichen gerade verläuft.

15. Schweißbrennereinheit nach Anspruch 13, bei der der Schweißdrahtführungsabschnitt (12) den Draht (7) im wesentlichen an der Elektrode (4) oder zu einem Punkt unterhalb der Spitze der Elektrode (4) hin ausrichtet.

16. Schweißbrennereinheit nach Anspruch 13, bei der der Schweißdrahtführungsabschnitt (12) Schweißdraht (7) mit einem Durchmesser von 1,6 mm oder mehr führen kann.

17. Schweißbrennereinheit nach Anspruch 13, bei der die Einheit ein Steuerungsmittel, das zumindest ein Signal an eine automatische Schweißdrahtzuführung leiten kann, um die Zuführung zu stoppen, wenn der Benutzer die Stromzufuhr zur Schweißelektrode (4) unterbricht, und/oder ein Mittel beinhaltet, um die Geschwindigkeit zu steuern, mit der der Draht von einer angebauten automatischen Drahtzuführung aus zugeführt wird.

## Revendications

1. Procédé de formation d'une soudure continue utilisant un ensemble de tête de soudage, ledit procédé comprenant les étapes consistant à :
a) alimenter une baguette d'apport (7) dans une zone de soudage (8) à un angle (9) de 50° ou moins par rapport au plan d'une surface de travail ou de la ligne de la soudure, ledit angle étant mesuré à la zone de soudage (8) ;
b) créer dans la zone de soudage (8) une soudure incorporant une pièce à usiner et une baguette d'apport ;
et dans lequel la baguette d'apport (7) est alimentée automatiquement dans la zone de soudage (8) par l'ensemble de tête de soudage (1), **caractérisé en ce que** la résistance de la pointe de la baguette d'apport contre la soudure nouvellement formée dans la zone de soudage (8) a pour résultat que l'ensemble de tête de soudage (1) est poussé à l'écart de la soudure nouvellement formée, dans la direction générale dans laquelle une soudure doit être formée, et à une vitesse proportionnelle à la vitesse à laquelle la baguette d'apport est alimentée dans la zone de soudage (8).

2. Procédé selon la revendication 1, dans lequel l'approche le long de laquelle la baguette d'apport est alimentée dans la zone de soudage suit un chemin sensiblement rectiligne.

3. Procédé selon la revendication 1 ou 2, dans lequel le chemin de la baguette, de la zone de soudage à sa source, est sensiblement libre de courbes susceptibles de gêner le déplacement de la baguette dans la zone de soudage.

4. Procédé selon les revendications 1 à 3, dans lequel la baguette d'apport est alimentée dans la zone de soudage à un taux inférieur à la vitesse maximale à laquelle l'ensemble de tête de soudage forme une soudure satisfaisante dans la zone de soudage.

5. Procédé selon les revendications 1 à 4, dans lequel est alimenté dans la zone de soudage un gaz sensiblement inerte ou un mélange de gaz réducteur ou les deux.

6. Procédé selon la revendication 5, dans lequel le mélange de gaz comprend deux ou plus des gaz hélium, argon et hydrogène.

7. Procédé selon les revendications 1 à 6, dans lequel la baguette d'apport a un diamètre de 1,6 mm ou plus.

8. Procédé selon les revendications 1 à 7, dans lequel l'angle de la tête et de l'ensemble de soudage est compris dans 30° de la perpendiculaire par rapport au plan de la surface de travail ou de la ligne de la soudure, ledit angle étant mesuré à la zone de soudage.

9. Procédé selon les revendications 1 à 8, quand il est utilisé pour former des soudures d'angle, et dans lequel la baguette d'apport est dirigée à un angle sensiblement perpendiculaire par rapport à l'électrode de soudage de l'ensemble de tête de soudage, et est sensiblement en intersection avec la pointe de l'électrode.

10. Procédé selon les revendications 1 à 8, quand il est utilisé pour former des soudures bout à bout, et dans lequel la baguette d'apport est dirigée vers un point entre l'électrode de soudage de l'ensemble de tête de soudage et la pièce à usiner.

11. Procédé selon les revendications 1 à 10, quand il est commandé par un utilisateur, l'agencement étant tel que l'ensemble de tête de soudage est tenu à la main, et que l'alimentation de la baguette d'apport dans la zone d'alimentation pousse l'ensemble de tête de soudage pour le faire avancer à un taux adapté pour former une soudure régulière pour la pièce à usiner en cours de soudage, l'utilisateur guidant l'ensemble de tête de soudage dans la direction dans laquelle une soudure doit être formée.

12. Procédé selon les revendications 1 à 11, dans lequel l'ensemble de tête de soudage est accouplé à un ensemble d'alimentation automatique de baguette.

13. Ensemble de tête de soudage (1) comprenant :
- un ensemble constitué d'un corps (2) et d'une tête (3) supportant une électrode de soudage (4), et comprenant un moyen pour diriger les gaz (5) capable de diriger une alimentation raccordée de mélange de gaz à proximité de l'électrode (4) ;
- une partie de guidage (12) pour une baguette d'apport (7) apte à être délivrée par un moyen d'alimentation automatique de baguette d'apport, la partie de guidage (12) dirigeant la baguette d'apport à un point à proximité de l'électrode (4) à un angle de 50° ou moins par rapport au plan d'une surface de travail ou de la ligne de la soudure,
**caractérisé en ce qu'**il comprend en outre un moyen pour alimenter la baguette d'apport (7) à une vitesse dont la composante horizontale est sensiblement la même que la vitesse souhaitée selon laquelle l'ensemble de tête de soudage (1) est poussé par l'effet de la résistance de la baguette contre une soudure nouvellement formée, dans la direction générale dans laquelle une soudure doit être formée.

14. Ensemble de tête de soudage selon la revendication 13, dans lequel la partie de guidage (12) de la baguette d'apport définit un chemin de la baguette d'apport (7) qui est sensiblement rectiligne.

15. Ensemble de tête de soudage selon la revendication 13, dans lequel la partie de guidage (12) de la baguette d'apport dirige la baguette (7) sensiblement vers l'électrode (4) ou vers un point sous la pointe de l'électrode (4).

16. Ensemble de tête de soudage selon la revendication 13, dans lequel la partie de guidage (12) de la baguette d'apport est capable de guider une baguette d'apport (7) de 1,6 mm ou plus.

17. Ensemble de tête de soudage selon la revendication 13, comprenant un moyen de commande capable d'au moins fournir un signal à une alimentation automatique de baguette d'apport pour qu'elle cesse d'alimenter la baguette quand l'utilisateur accomplit l'action de couper l'alimentation électrique à l'électrode de soudage (4), et/ou comprenant un moyen pour commander la vitesse à laquelle la baguette est alimentée à partir d'une alimentation automatique de baguette associée à l'ensemble.
